# EUROPÄISCHE PATENTSCHRIFT

(11) **EP 2 386 432 B1**
(45) Veröffentlichungstag und Bekanntmachung des Hinweises auf die Patenterteilung: **03.04.2013**
(21) Anmeldenummer: 10004946.9
(22) Anmeldetag: 11.05.2010
(51) Int. Cl.: B60D 5/00, B61D 17/22

(54) **Gelenkfahrzeug**
Articulated vehicle
Véhicule articulé

(43) Veröffentlichungstag der Anmeldung: 16.11.2011
(73) Patentinhaber: Hübner GmbH, 34123 Kassel (DE)
(72) Erfinder: Jünke, Volker, 34587 Felsberg (DE)
(74) Vertreter: Walther, Walther & Hinz GbR

(56) Entgegenhaltungen:
- EP-A1- 0 336 809
- EP-A1- 2 149 463
- WO-A1-02/079017
- DE-A1- 1 400 854
- DE-A1- 10 044 127
- DE-U1- 29 509 204

## Beschreibung

Die Erfindung betrifft ein Gelenkfahrzeug mit einem Übergang zwischen zwei Fahrzeugteilen, wobei der Übergang einen Balg umfasst, wobei der Balg durch einen Rahmen an der Stirnseite des Wagenkastens des jeweiligen Fahrzeugteils befestigt ist, wobei zur Überbrückung des Abstandes zwischen der Stirnseite des Wagenkastens und der Stirnseite des Balges ein Überbrückungsprofil vorgesehen ist.

Gelenkfahrzeuge der eingangs genannten Art, insbesondere Schienenfahrzeuge sind aus dem Stand der Technik hinreichend bekannt.

Hierbei gibt es Gelenkfahrzeuge mit einem Gelenk zwischen den Fahrzeugteilen und solchen, die zwei Gelenke aufweisen, wobei die Fahrzeugteile durch eine Kuppelstange miteinander verbunden sind, wobei die Kuppelstange jeweils durch ein Gelenk mit dem Fahrzeugteil verbunden ist. Der Begriff Gelenkfahrzeug umfasst diese beiden Ausführungsformen Insbesondere sind auch Schienenfahrzeuge bekannt, bei denen der Balg im wesentlichen außenhautbündig zur Wandung des Wagenkastens verläuft. Der Vorteil einer solchen Gestaltung des Verlaufs des Balges verhindert eine größere Wirbelbildung zwischen den beiden durch den Übergang verbundenen Fahrzeugteilen. Denn offensichtlich ist, dass je größer der seitliche Abstand zwischen der Außenkontur des Balges einerseits und der Außenkontur der Fahrzeugteile andererseits ist, umso höher ist die Wirbelbildung zwischen den Fahrzeugteilen mit der Folge des Auftretens entsprechender Strömungsverluste. Insofern ist man, wie bereits ausgeführt, bestrebt, den Balg möglichst so an der Stirnwand des Wagenkastens des Fahrzeugs anzuordnen, dass die Außenkontur des Balges in einer Ebene mit der Außenkontur der Fahrzeugteile verläuft.

Dies lässt sich aus technischen Gründen allerdings nicht immer bewerkstelligen. So ist bekannt, dass der Balg mittels eines Anschraubrahmens an der Stirnseite des Wagenkastens des jeweiligen Fahrzeugteiles angebracht ist. Der Anschraubrahmen ist umlaufend an der Stirnseite des Wagenkastens angebracht und nimmt entsprechend den Balg, ebenfalls kastenförmig, umlaufend auf. Die Befestigung des Anschraubrahmens erfolgt, wie dies der Begriff Anschraubrahmen bereits nahe legt, durch Verschraubung mit der Stirnseite des Wagenkastens. Wie bereits ebenfalls ausgeführt, kann die Anbringung des Anschraubrahmens nicht derart an der Stirnseite des Wagenkastens erfolgen, dass die Außenkontur des Balges bündig mit der Außenkontur des Wagenkastens abschließt. Ebenfalls ist zu bedenken, dass zur Befestigung des Anschraubrahmens an der Stirnseite des Wagenkastens des jeweiligen Fahrzeugteils die Schrauben von außen zugänglich sein müssen. Das bedeutet auch, dass ein entsprechender Raum vorhanden sein muss, um mit dem entsprechenden Werkzeug den Anschraubrahmen an der Stirnseite des Wagenkastens zu befestigen. Hieraus wird deutlich, dass nicht nur zwischen der Außenkontur des Balges und der Außenkontur der Wagenkästen ein Abstand quer zur Längsachse des Gelenkfahrzeugs besteht, sondern ebenfalls ein Abstand parallel zur Fahrzeuglängsachse zwischen der Stirnseite des Wagenkastens und der Stirnseite des Balges bzw. zwischen dem Anschraubrahmen einerseits und der Stirnseite des Balges.

Aus der EP 20029981 B1 ist allerdings auch bekannt, den Balg mit Hilfe eines Kuppelrahmens an der Stirnseite des Fahrzeugs zu befestigen. Hierbei kann der Kuppelrahmen, an dem der Balg angeordnet ist unmittelbar mit der Stirnseite des Wagenkastens verbunden sein oder mittelbar dadurch, dass auf der Stirnseite des Wagenkastens ein zweiter Kuppelrahmen vorgesehen ist, der mit dem Kuppelrahmen am Balg kuppelbar ist.

In der gattungsgemäßen EP 2 149 463 A1 ist die Befestigung eines Balges am Balgrahmen beschrieben, wobei der Balgrahmen an der Stirnseite des Fahrzeugs befestigt ist. Der Balg selbst ist durch einen Rahmen nach Art eines Keders gehalten, wobei der Rahmen in dem Balgrahmen durch ein Einschlagprofil fixiert ist.

Bei strömungstechnischen Untersuchungen hat sich gezeigt, dass der Zwischenraum zwischen Balg und Wagenkasten, der eigentlich marginal im Verhältnis zur Größe der übrigen Bauteile ist, dennoch zu erheblichen Verwirbelungen führt, was einerseits nicht dem Ziel der Geräuschminderung im Inneren des Übergangs dienlich ist, und zum anderen Strömungsverluste erzeugt, was sich bei hohen Geschwindigkeiten in höheren Verbräuchen niederschlägt.

Zur Verminderung der Wirbelbildung wird bei einem Balg, dessen Außenkontur einen seitlichen Abstand Z zur Wandung des Wagenkastens zeigt, vorgeschlagen, dass durch das Überbrückungsprofil der Abstand zwischen der Außenkontur des Balges und der Wandung des Wagenkastens des Fahrzeugteils überbrückt ist. Durch ein solches Überbrückungsprofil, das ebenso wie der Anschraubrahmen und entsprechend auch der Balg umlaufend an der Stirnseite des Wagenkastens angebracht ist, wird nicht nur der Zwischenraum zwischen der Stirnseite des Balges einerseits und der Wagenkastenstirnseite andererseits abgeschlossen. sondernauch der seitliche Abstand von der Wandung des Wagenkastens zur Außenseite des Balges, mit der Folge, dass eine Wirbelbildung in diesem Bereich im wesentlich nicht mehr eintritt.

Vorteilhafte Merkmale ergeben sich aus den Unteransprüchen.

So ist insbesondere vorgesehen, dass das Überbrückungsprofil, das aus Kunststoff ausgebildet ist, an dem Rahmen insbesondere einclipsbar fixierbar ist. Durch die Herstellung des Überbrückungsprofiles aus Kunststoff und die Wahl der Elastizität des Kunststoffmaterials kann das Überbrückungsprofil, nach Einbau des Rahmens an der Stirnseite des Wagenkastens, in eine entsprechende Ausnehmung in der seitlichen Stirnseite des Rahmens eingeclipst werden, wobei hierzu das Überbrückungsprofil einen entsprechenden Steg aufweist.

Der Rahmen kann hierbei nach einer Ausführungsform als Anschraubrahmen ausgebildet sein oder aber als Kuppelrahmen, wobei das Überbrückungsprofil seitlich an der Stirnseite entweder des Anschraubrahmens oder des Kuppelrahmens insbesondere einclipsbar fixierbar ist.

Der Anschraubrahmen ist im Einzelnen derart ausgestaltet, dass dieser eine an der Stirnseite des Fahrzeugs anbringbare Anschraubleiste umfasst, wobei weiterhin vorteilhaft die Anschraubleiste einen zur Ebene der Anschraubleiste in Richtung des Balges abgewinkelten Hals aufweist, wobei an dem Hals ein Kopf zur insbesondere klemmbaren Aufnahme des Balges angeordnet ist. Durch diese Ausbildung des Anschraubrahmens wird ermöglicht, dass bereits bei an dem Balg angeordneten Anschraubrahmen die Bohrungen in der Anschraubleiste mit entsprechendem Werkzeug bzw. einem Inbusschlüssel zugänglich sind, um mittels Schrauben die Anschraubleiste des Anschraubrahmens mit der Stirnseite des Wagenkastens zu verbinden.

Durch die nach einem weiteren, vorteilhaften Merkmal im Querschnitt viertelkreisförmige Außenkontur oder eine im Querschnitt dreiecksförmige Kontur mit ebener Außenkante des Überbrückungsprofils wird nun erreicht, dass hierdurch sowohl der Abstand quer zur Längsachse zwischen der Außenkontur des Balges einerseits und der Außenkontur des Wagenkastens andererseits, als auch parallel zur Längsachse der Abstand des Fahrzeugs zwischen der Stirnseite des Balges und der Stirnseite der Wagenkastenwand überbrückt wird. Das heißt, dass der Fahrtwind sich nicht mehr im Bereich des Übergangs vom Balg zum Wagenkasten fängt und somit eine Wirbelbildung in diesem Bereich weitestgehend vermieden wird.

Um zu verhindern, dass Feuchtigkeit in das Innere des Fahrzeugs gelangen kann, ist nach einem weiteren Merkmal der Erfindung weiterhin vorgesehen, dass der Kopf des Anschraubrahmens ein Dichtungsprofil aufweist, das an der Stirnseite des Wagenkastens anliegt.

Nach einem weiteren, besonderen Merkmal der Erfindung ist im Zusammenhang mit der Verhinderung des Eindringens von Feuchtigkeit vorgesehen, dass das Überbrückungsprofil auf seiner der Stirnseite des Wagenkastens zugewandten Seite eine Dichtung, insbesondere eine Dichtlippe aufweist. Es wurde bereits dargelegt, dass bei einer Ausführungsform mit einem Anschraubrahmen ein Dichtungsprofil vorgesehen ist, das den Eintritt von Feuchtigkeit in das Innere des Übergangs verhindert. Ein solches Dichtungsprofil kann auch am Kuppelrahmen angeordnet sein. Dieses Dichtungsprofil verhindert allerdings nicht, dass im Bereich der Schraubverbindung Feuchtigkeit eintritt, was insbesondere dadurch begründet ist, dass die Stirnseite des Wagenkastens nicht eben ausgebildet ist, sondern leicht wellig ist. Dadurch, dass das Überbrückungsprofil nunmehr eine Dichtung aufweist, die das Eindringen von Feuchtigkeit bereits im Bereich der Wandung des Wagenkastens verhindert, besteht nunmehr nicht mehr die Gefahr, dass beispielsweise der Anschraubrahmen rostet oder die Schraubverbindung des Anschraubrahmens durch Rost Schaden nimmt. Gleiches gilt sinngemäß auch bei der Verwendung eines Kuppelrahmens zur Verbindung des Balges mit der Stirnseite des Wagenkastens des Fahrzeugteils. Dies gilt insbesondere vor dem Hintergrund, dass die Stirnseite des Wagenkastens nie eben ist, sondern etwas wellig.

Anhand der Zeichnungen wird die Erfindung nachstehend beispielhaft näher erläutert.
- Fig. 1: zeigt schematisch ein Gelenkfahrzeug in einer Seitenansicht;
- Fig. 2: zeigt einen Schnitt gemäß der Linie II-II aus Fig. 1, um den Verlauf des Anschraubrahmens an der Stirnseite des Wagenkastens erkennbar zu machen;
- Fig. 3: zeigt schematisch einen Schnitt durch den Anschraubrahmen sowie den Wagenkasten und den Balg;
- Fig. 4: zeigt schematisch einen Kuppelrahmen mit Kuppelgliedern;
- Fig. 5: zeigt die schematische Verbindung des Balges mit der Stirnseite des Fahrzeugs mit zwei Kuppelrahmen;
- Fig. 6: zeigt das Überbrückungsprofil mit einer Dichtlippe auf seiner der Stirnseite des Wagenkastens zugewandten Seite.

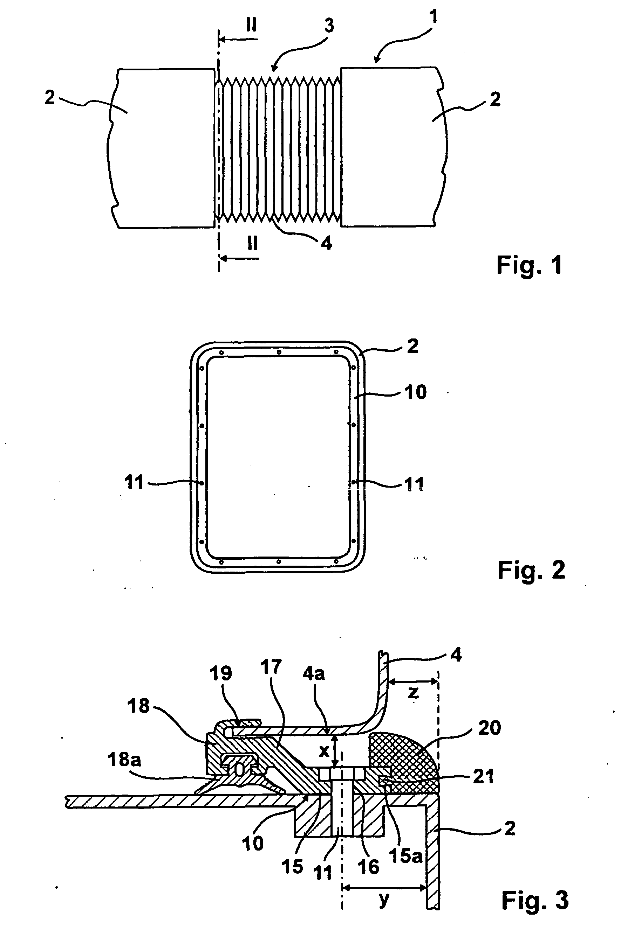

Gemäß Fig. 1 ist das mit 1 bezeichnete Gelenkfahrzeug mit einem Übergang 3 versehen, der zwischen den beiden Fahrzeugteilen 2 angeordnet ist. Der Übergang 3 umfasst im Einzelnen den Balg 4, der an der Stirnseite der Wagenkästen der Fahrzeugteile 2 durch jeweils einen Anschraubrahmen 10 befestigt ist. Die Verbindung des Anschraubrahmens 10 mit der Stirnseite des Wagenkastens des jeweiligen Fahrzeugs 2 erfolgt durch Schrauben 11 (Fig. 2).

Die Ausbildung des Anschraubrahmens sowie die Anordnung des erfindungsgemäßen Überbrückungsprofils ergibt sich im Einzelnen aus der Fig. 3. Der mit 10 bezeichnete Anschraubrahmen umfasst die Anschraubleiste 15, die Bohrungen 16 zur Aufnahme von Schrauben 11 aufweist, um den Anschraubrahmen durch die Anschraubleiste mit der Stirnseite des Wagenkastens des Fahrzeugteils 2 zu verbinden. Der Anschraubrahmen weist darüber hinaus einen zu der Oberseite der Anschraubleiste 15 in Richtung auf den Balg 4 abgewinkelten Hals 17 auf, wobei der Hals endseitig einen Kopf 18 besitzt, der mit einem schlitzartigen Maul 19 versehen ist, das den Balg 4 klemmbar aufnimmt, wie dies aus Fig. 3 erkennbar ist. Erkennbar besteht zwischen der Stirnseite des Balges (Pfeil 4a) ein Abstand x zur Oberseite zur Anschraubleiste 15 des Anschraubrahmens 10. Dieser Abstand x ist erforderlich, um bei an dem Anschraubrahmen bereits angeordneten Balg 4 die in den Bohrungen 16 einsitzenden Schrauben 11 mit der Stirnseite des Wagenkastens des jeweiligen Fahrzeugs verschrauben zu können. Die in den Bohrungen 16 einsitzenden Schrauben 11 finden mutterartige Gegenstücke in der Stirnseite des Wagenkastens. Aus Stabilitätsgründen befinden sich diese mit einem Abstand y seitlich beabstandet zu der Außenkontur des Wagenkastens des jeweiligen Fahrzeugteils 2. Das erfindungsgemäße Überbrückungsprofil 20 schließt nun, wie sich dies aus Fig. 3 ergibt, den Abstand x zwischen der Stirnseite des Balges und der Oberseite der Anschraubleiste des Anschraubrahmens, und überbrückt darüber hinaus auch den seitlichen Abstand z zwischen der Außenkontur des Balges 4 einerseits und der Außenkontur des Wagenkastens des Fahrzeugteiles 2 andererseits. Das erfindungsgemäße Überbrückungsprofil 20 ist im Querschnitt viertelkreisförmig ausgebildet, und schließt bündig mit der Außenkontur des Wagenkastens des Fahrzeugteils 2 ab, und erstreckt sich zumindest über die Oberseite der Anschraubleiste bis in den stirnseitigen Bereich des Balges 4, wie dies aus Fig. 3 erkennbar ist. Zur Befestigung des Überbrückungsprofiles, das auch als Anströmleiste bezeichnet werden kann, dient eine in der Stirnseite der Anschraubleiste des Anschraubrahmens angeordnete schwalbenschwanzförmige Ausnehmung 15a, wobei korrespondierend hierzu das Überbrückungsprofil einen entsprechenden Steg 21 aufweist, der in die Ausnehmung 15a einclipsbar ist. Der Kopf 18 zeigt darüber hinaus ein Dichtungsprofil 18a, das an der Stirnseite des Wagenkastens des Fahrzeugteiles 2 anliegt und dafür sorgt, dass der Übergang vom Balg zum Rahmen gegen Feuchtigkeit abgedichtet ist.

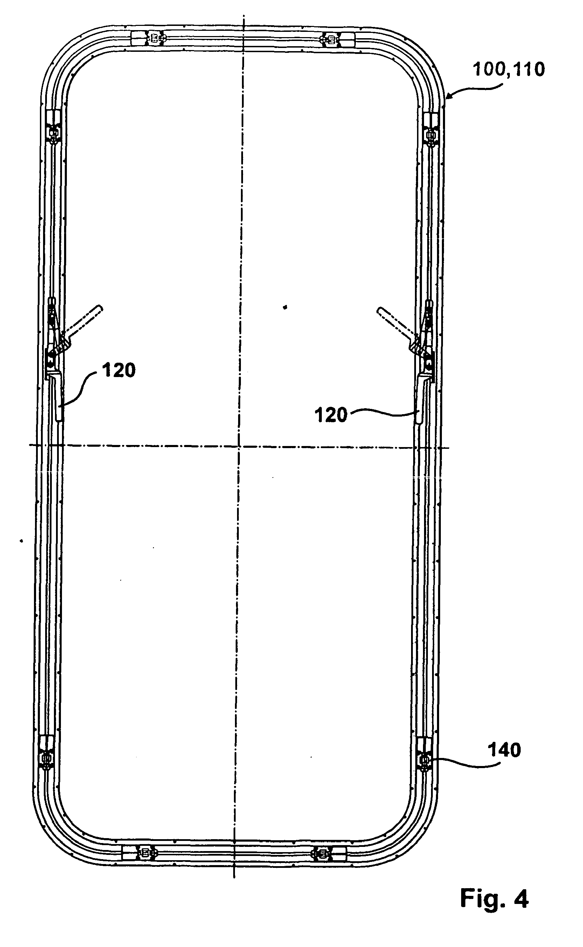

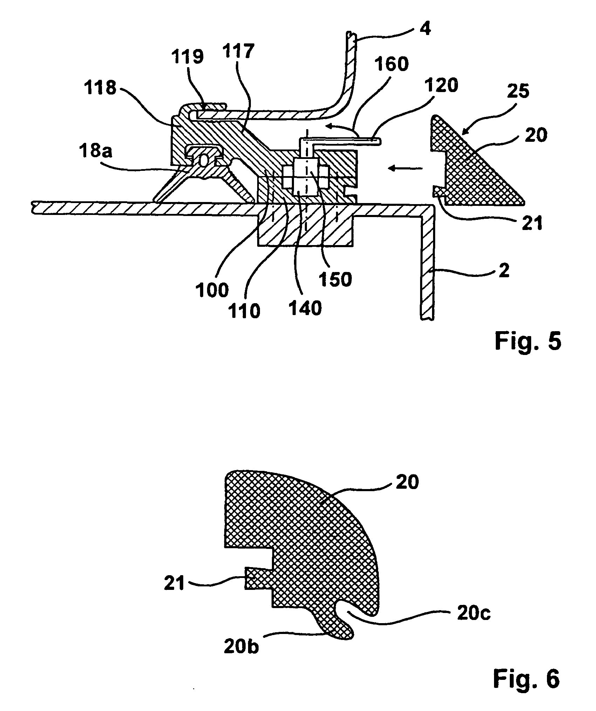

Fig. 4 zeigt beispielhaft den Kuppelrahmen 100, 110 mit welchem der Balg 4 entweder unmittelbar mit der Stirnseite des Wagenkastens verbunden werden kann oder mittelbar dadurch, dass an der Stirnseite ein weiterer Kuppelrahmen angeordnet ist, der mit dem Kuppelrahmen des Balges kuppelbar ist. In jedem Fall sind männliche und weibliche Kuppelglieder 140, 150 vorgesehen (in Fig. 5 schematisch dargestellt), die mittels am Kuppelrahmen angeordneter Hebel 120 miteinander in Verrieglungsstellung bringbar sind. Wie bereits an anderer Stelle ausgeführt, ist die Verbindung zweier Kuppelrahmen Stand der Technik gemäß der EP 20029981 B1, auf die explizit Bezug genommen wird. Der in Fig. 4 dargestellte Kuppelrahmen weist weibliche Kuppelglieder 150, 140, wobei korrespondierend hierzu der andere Kuppelrahmen entsprechend männliche Kuppelglieder aufweist (nicht dargestellt).

Wie sich aus Fig. 5 ergibt, ist der eine Kuppelrahmen 110 beispielsweise durch Schrauben mit der Stirnseite des Wagenkastens verbunden. Der andere Kuppelrahmen 100, der über einen Hals 117 mit angesetztem Kopf 118 mit daran befindlichem Maul 119 den Balg 4 aufnimmt, ist wie bereits ausgeführt über männliche und weibliche Kuppelglieder mit dem Kuppelrahmen 110 in lösbare Verbindung zu bringen. Hierzu dient der Hebel 120, der zur Verriegelung in Richtung des Pfeiles 160 verschwenkt wird. Das heißt, die Fig. 5 zeigt den Hebel 120 in Entriegelungsstellung.

Auch hier ist eine Dichtung 118a vorgesehen, in gleicher Funktion wie die Dichtung 18a aus Fig. 3.

Erkennbar ist in Fig. 5 darüber hinaus, dass das Überbrückungsprofil 20, das im Querschnitt dreieckförmig ausgebildet ist, und eine ebene nach außen gerichtete Außenkontur aufweist (Pfeil 25).

Aus Fig. 6 ist eine besondere Ausführungsform eines Überbrückungsprofils 20 erkennbar, die sich dadurch auszeichnet, dass das Überbrückungsprofil 20 an seiner der Stirnseite des Wagenkastens zugewandten Seite eine Dichtlippe 20b aufzeigt sowie mit einer Dichtungsausnehmung 20c. Die Dichtlippe 20b verschwenkt im eingebauten Zustand des Überbrückungsprofils in Richtung der Ausnehmung 20c.

## Patentansprüche

1. Gelenkfahrzeug (1) mit einem Übergang (3) zwischen zwei Fahrzeugteilen (2), wobei der Übergang einen Balg (4) umfasst, wobei der Balg (4) durch einen Rahmen (10, 100) an der Stirnseite des Wagenkastens des jeweiligen Fahrzeugteils (2) befestigt ist,
wobei zur Überbrückung des Abstandes zwischen der Stirnseite des Wagenkastens und der Stirnseite des Balges (4) ein Überbrückungsprofil (20) vorgesehen ist,
**dadurch gekennzeichnet,**
**dass** die Außenkontur des Balges einen seitlichen Abstand z zur Wandung des Wagenkastens zeigt, wobei durch das Überbrückungsprofil (20) der Abstand zwischen der Außenkontur des Balges (4) und der Wandung des Wagenkastens des Fahrzeugteils (2) überbrückt ist.

2. Gelenkfahrzeug nach Anspruch 1,
**dadurch gekennzeichnet,**
**dass** das Überbrückungsprofil (20) an dem Rahmen (10, 100) fixierbar ist.

3. Gelenkfahrzeug nach einem der voranstehenden Ansprüche,
**dadurch gekennzeichnet,**
**dass** das Überbrückungsprofil (20) einclipsbar durch den Rahmen (10, 100) aufnehmbar ist.

4. Gelenkfahrzeug nach einem der voranstehenden Ansprüche,
**dadurch gekennzeichnet,**
**dass** der Rahmen als Anschraubrahmen (10) ausgebildet ist und eine an der Stirnseite des Wagenkastens anbringbare Anschraubleiste (15) umfasst.

5. Gelenkfahrzeug nach einem der voranstehenden Ansprüche,
**dadurch gekennzeichnet,**
**dass** die Anschraubleiste (15) einen zur Ebene der Anschraubleiste abgewinkelten Hals (17) aufweist, wobei an dem Hals (17) ein Kopf (18) zur Aufnahme des Balges (4) angeordnet ist.

6. Gelenkfahrzeug nach Anspruch 5,
**dadurch gekennzeichnet,**
**dass** der Kopf (18) ein Maul (19) zur Aufnahme des Balges (4) aufweist.

7. Gelenkfahrzeug nach einem der voranstehenden Ansprüche,
**dadurch gekennzeichnet,**
**dass** der Balg (4) im Bereich der Stirnseite zur Anschraubleiste (15) des Anschraubrahmens (10) einen Abstand x aufweist, der durch das Überbrückungsprofil im wesentlichen abgedeckt ist.

8. Gelenkfahrzeug nach Anspruch 5 oder 6,
**dadurch gekennzeichnet,**
**dass** der Kopf (18) des Anschraubrahmens ein Dichtungsprofil (18a) aufweist, dass an der Stirnseite des Wagenkastens anliegt.

9. Gelenkfahrzeug nach einem der voranstehenden Ansprüche,
**dadurch gekennzeichnet,**
**dass** der Rahmen als Kuppelrahmen (100) ausgebildet ist, wobei der Kuppelrahmen (100) durch Kuppelglieder (140, 150) mit der Stirnseite des Wagenkastens verbindbar ist.

10. Gelenkfahrzeug nach einem der voranstehenden Ansprüche,
**dadurch gekennzeichnet,**
**dass** an der Stirnseite des Wagenkastens ein weiterer Kuppelrahmen (110) vorgesehen ist, der mit dem Kuppelrahmen (100), der den Balg aufnimmt, kuppelbar ist

11. Gelenkfahrzeug nach einem der voranstehenden Ansprüche,
**dadurch gekennzeichnet,**
**dass** das Überbrückungsprofil (20) im Querschnitt eine viertelkreisförmige Außenkontur aufweist.

12. Gelenkfahrzeug nach einem der voranstehenden Ansprüche,
**dadurch gekennzeichnet,**
**dass** das Überbrückungsprofil (20) im Querschnitt nach Art eines Dreiecks ausgebildet ist, wobei die Außenkontur als Schräge ausgebildet ist.

13. Gelenkfahrzeug nach einem der voranstehenden Ansprüche,
**dadurch gekennzeichnet,**
**dass** das Überbrückungsprofil (20) aus Kunststoff ausgebildet ist.

14. Gelenkfahrzeug nach einem der voranstehenden Ansprüche,
**dadurch gekennzeichnet,**
**dass** das Überbrückungsprofil (20) an der Anlageseite an der Stirnseite des Wagenkastens eine Dichtlippe (20a) aufweist.

## Claims

1. An articulated vehicle (1) with a gangway (3) between two vehicle parts (2), wherein the gangway comprises a bellows (4), wherein the bellows (4) is attached to the front side of the coach body of the respective vehicle part (2) by a frame (10, 100), wherein a bridging profile (20) is provided for bridging the gap between the front side of the coach body and the front side of the bellows (4),
**characterized in that**
the outer contour of the bellows presents a lateral gap z relative to the wall of the coach body, wherein the gap between the outer contour of the bellows (4) and the wall of the coach body of the vehicle part (2) is bridged by the bridging profile (20).

2. The articulated vehicle according to claim 1,
**characterized in that**
the bridging profile (20) is attachable to the frame (10, 100).

3. The articulated vehicle according to one of the afore-mentioned claims,
**characterized in that**
the bridging profile (20) is receivable by the frame (10, 100) in a clippable manner.

4. The articulated vehicle according to one of the afore-mentioned claims,
**characterized in that**
the frame is configured as an screw-on frame (10) and comprises a screw-on rail (15) that is attachable to the front side of the coach body.

5. The articulated vehicle according to one of the afore-mentioned claims,
**characterized in that**
the screw-on rail (15) has a neck (17) that is angled relative to the plane of the screw-on rail, wherein a head (18) is disposed on the neck (17) for receiving the bellows (4).

6. The articulated vehicle according to claim 5, **characterized in that** the head (18) has a jaw (19) for receiving the bellows (4).

7. The articulated vehicle according to one of the afore-mentioned claims,
**characterized in that**
in the area of the front side, the bellows (4) has a gap x relative to the screw-on rail (15) of the screw-on frame (10), which is substantially covered by the bridging profile.

8. The articulated vehicle according to claim 5 or 6,
**characterized in that**
the head (18) of the screw-on frame has a sealing profile (18a) that rests on the front side of the coach body.

9. The articulated vehicle according to one of the afore-mentioned claims,
**characterized in that**
the frame is configured as a coupling frame (100), wherein the coupling frame (100) is connectable to the front side of the coach body by way of coupling members (140, 150).

10. The articulated vehicle according to one of the afore-mentioned claims,
**characterized in that**
another coupling frame (110) is provided on the front side of the coach body, which is couplable with the coupling frame (100) that receives the bellows.

11. The articulated vehicle according to one of the afore-mentioned claims,
**characterized in that**
the bridging profile (20) has an outer contour with a quadrant-shaped cross-section.

12. The articulated vehicle according to one of the afore-mentioned claims,
**characterized in that**
the bridging profile (20) is configured with a triangular cross-section, wherein the outer contour is configured as an inclined surface.

13. The articulated vehicle according to one of the afore-mentioned claims,
**characterized in that**
the bridging profile (20) is formed of a plastic material.

14. The articulated vehicle according to one of the afore-mentioned claims,
**characterized in that**
the bridging profile (20) has a sealing lip (20a) on the side resting on the front side of the coach body.

## Revendications

1. Véhicule articulé (1) comportant un passage (3) entre deux parties de véhicule (2), dans lequel le passage comporte un soufflet (4), dans lequel le soufflet (4) est fixé au moyen d'un cadre (10, 100) à la face frontale de la carrosserie de la partie de véhicule (2) correspondante, dans lequel un profil de pontage (20) est prévu pour ponter l'espacement entre la face frontale de la carrosserie du véhicule et la face frontale du soufflet (4),
**caractérisé en ce que**,
le contour extérieur du soufflet présente un écart latéral z par rapport à la paroi de la carrosserie du véhicule, dans lequel, l'espacement entre le pourtour extérieur du soufflet (4) et la paroi de la carrosserie du véhicule (2) est ponté par le profil de pontage (20).

2. Véhicule articulé selon la revendication 1,
**caractérisé en ce que**,
le profil de pontage (20) peut être fixé au cadre (10, 100).

3. Véhicule articulé selon une des revendications précédentes,
**caractérisé en ce que**,
le profil de pontage (20) peut être repris par le cadre (10, 100) par clipsage.

4. Véhicule articulé selon l'une des revendications précédentes,
**caractérisé en ce que**,
le cadre est réalisé sous forme de cadre vissé (10) et comporte une liste à fixer par vissage (15) agencée pour être montée sur la paroi frontale de la carrosserie du véhicule.

5. Véhicule articulé selon l'une des revendications précédentes,
**caractérisé en ce que**,
la liste à fixer par vissage (15) comporte un col (17) coudé par rapport au plan de la liste à fixer par vissage, dans lequel le col (17) comporte une tête (18) pour recevoir le soufflet (4).

6. Véhicule articulé selon la revendication 5,
**caractérisé en ce que**,
la tête (18) comporte une embouchure (19) dans laquelle est engagé le soufflet (4).

7. Véhicule articulé selon l'une des revendications précédentes,
**caractérisé en ce que**,
le soufflet (4) présente un espacement x dans le secteur de la face frontale de la liste à fixer par vissage (15) du cadre vissé (10), qui est recouvert intégralement par le profil de pontage.

8. Véhicule articulé selon les revendications 5 ou 6,
**caractérisé en ce que**,
la tête (18) du cadre vissé comporte un joint d'étanchéité (18a) qui prend appui contre la face frontale de la carrosserie du véhicule.

9. Véhicule articulé selon l'une des revendications précédentes,
**caractérisé en ce que**,
le cadre est réalisé sous la forme d'un cadre à coupler (100), dans lequel le cadre à coupler (100) est lié à la face frontale de la carrosserie du véhicule au moyen d'éléments de couplage (140, 150).

10. Véhicule articulé selon l'une des revendications précédentes,
**caractérisé en ce que**,
la face frontale de la carrosserie du véhicule comprend un autre cadre à coupler (110) qui peut être couplé avec le cadre à coupler (100) portant le soufflet.

11. Véhicule articulé selon l'une des revendications précédentes,
**caractérisé en ce que**,
le profil de pontage (20) comporte un profil extérieur ayant une section transversale en forme de quart de cercle.

12. Véhicule articulé selon l'une des revendications précédentes,
**caractérisé en ce que**,
le profil de pontage (20) comporte une section transversale en forme de triangle, dans lequel le profil extérieur est incliné.

13. Véhicule articulé selon l'une des revendications précédentes,
**caractérisé en ce que**,
le profil de pontage (20) est réalisé en matière synthétique.

14. Véhicule articulé selon l'une des revendications précédentes,
**caractérisé en ce que**,
le profil de pontage (20) est pourvu sur son coté en appui contre la face frontale de la carrosserie du véhicule d'une lèvre d'étanchéité (20a).
